Europäisches Patentamt

(19) European Patent Office

Office européen des brevets

(11) Publication number: 0 194 723
A1

# (12) EUROPEAN PATENT APPLICATION

(21) Application number: 86200355.5

(22) Date of filing: 07.03.86

(51) Int. Cl.⁴: H 04 M 1/60

(30) Priority: 11.03.85 NL 8500674

(43) Date of publication of application:
17.09.86 Bulletin 86/38

(84) Designated Contracting States:
AT BE DE FR GB IT SE

(71) Applicant: N.V. Philips' Gloeilampenfabrieken
Groenewoudseweg 1
NL-5621 BA Eindhoven(NL)

(72) Inventor: Geboers, Josephus Johannes Antonius
c/o INT. OCTROOIBUREAU B.V. Prof. Holstlaan 6
NL-5656 AA Eindhoven(NL)

(72) Inventor: Sijbers, Peter Johannes Maria
c/o INT. OCTROOIBUREAU B.V. Prof. Holstlaan 6
NL-5656 AA Eindhoven(NL)

(74) Representative: De Jongh, Cornelis Dominicus et al,
INTERNATIONAAL OCTROOIBUREAU B.V. Prof.
Holstlaan 6
NL-5656 AA Eindhoven(NL)

(54) Variable reference voltage-transmission amplifier in the form of a line voltage stabiliser.

(57) Transmission amplifier which also stabilises the line d.c. voltage for the audio transmission circuit of a telephone set. Customary transmission amplifiers of this construction do not operate anymore when the line voltage decreases to below a threshold value because of external causes, for example when a non-electronic set is arranged in parallel. By reducing, in accordance with the invention, the reference voltage for the line voltage stabilisation if the line d.c. voltage approaches the threshold value, the output stage of the transmission amplifier continues to conduct current, thus enabling the transmission amplifier to continue transmitting signals through the subscriber's line.

FIG.4

Croydon Printing Company Ltd.

0194723

"Variable reference voltage-transmission amplifier in the form of
a line voltage stabiliser"

The invention relates to a telephone set which is fed with
line d.c. voltage _via_ the subscriber's line, comprising a transmission
amplifier which is in the form of a line voltage stabiliser and
includes an input stage constituted by a fed-back operational
amplifier, the transmission amplifier comprising a circuit for
producing a reference voltage for line voltage stabilisation, means
for forming the difference between the line d.c. voltage and the
reference voltage, which difference voltage is applied to a first
input of the operational amplifier, and means for producing an
auxiliary voltage which linearly depends on the line direct current,
the auxiliary voltage being applied to a second input of the
operational amplifier.

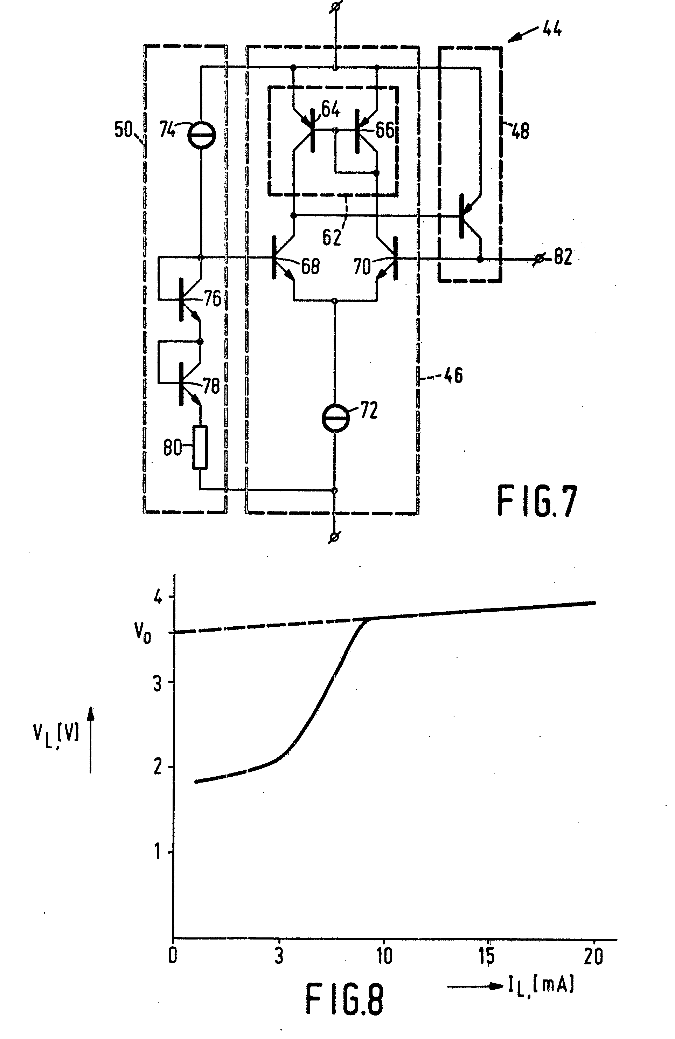

Such a telephone set is disclosed in the Article
"A Programmable Speech Circuit Suitable for Telephone Transducers"
IEEE Journal of Solid-State Circuits, Vol. SC-17, No. 6, December
1982, pages 1149-1157, more specifically Figure 8.

A telephone set connected to a subscriber's line of a
public telephone network receives _via_ this subscriber's line from
the telephone exchange a line voltage formed by a d.c. voltage
component, the line d.c. voltage and an a.c. voltage component.
In addition the line d.c. voltage is modulated by the signal to be
transmitted by the telephone set.

In the telephone set, the line d.c. voltage is set by a
voltage stabiliser which may form part of the transmission amplifier.
A transmission amplifier which at the same time constitutes a
voltage stabiliser, as is also described in the above-mentioned
IEEE article, controls the line d.c. voltage at the terminals of
the telephone set in such a manner that this line d.c. voltage
is formed by a first constant voltage portion on which a second
portion which is proportional to the line direct current is superposed.
Such a control is accomplished in that the fed-back operational
amplifier controls its output such that the voltages at its two
inputs are substantially equal. Consequently, said difference voltage is kept equal to said auxiliary voltage.

If by some cause or another the telephone set were supplied with a line d.c. voltage lower than the first constant-voltage portion, then no current flows anymore through the output stage of the transmission amplifier, as a result of which the transmission amplifier would not be capable anymore of transmitting signals through the subscriber's line.

Such a situation may occur if a second, conventional telephone set without electronic line voltage stabiliser is switched in parallel with a telephone set including an electronic line voltage stabiliser. The current-voltage characteristic for direct current of such a conventional telephone set is generally the current-voltage characteristic of an ordinary ohmic resistance of, for example, 200 $\Omega$ . If this parallel arrangement of telephone sets is connected to a long subscriber's line, which, because of its high resistance, can only produce little line direct current (for example 15 mA), then a voltage (for example 3 V) which is lower than the constant portion (for example 4 V) of the line d.c. voltage to be adjusted by the electronic set may be produced across the conventional set.

The invention has for its object to provide a telephone set of the type described in the opening paragraph, which even at low line d.c. voltage remains capable of applying a transmission signal to the subscriber's line.

According to the invention, the telephone set is therefore characterized in that the transmission amplifier includes means which reduce the reference voltage when the line d.c. voltage decreases to below a predetermined value.

Reducing the reference voltage accomplishes that the constant portion of the line d.c. voltage to be set by the telephone set is also reduced, as a result of which current still continues to flow through the output stage of the transmission amplifier even in the case a conventional telephone set is connected in parallel.

An embodiment of the telephone set according to the invention includes a comparator circuit for controlling the circuit for producing the reference voltage for line voltage stabilisation. Also when the telephone set operates with a reduced line voltage, this comparator circuit, which is fed with this reduced line voltage, must continue to function.

An embodiment of the telephone set according to the invention including a comparator circuit which also continues to function at low supply voltages, is characterized in that the comparator circuit is constituted by a current mirror to whose input and output the collector of each of the transistors are connected, these two transistors together forming a differential stage having a common emitter lead in which a current source is provided, the output of this comparator being constituted by the output of the current mirror.

The supply voltage of the comparator circuit of such a structure  is equal to the sum of the voltages across the current mirror, across the collector-emitter path of the differential stage and across the current source in the emitter lead. This sum voltage may amount at the very least to twice a transistor saturation voltage of 0.2 V plus a diode forward voltage of 0.7 V, so may be in the order of magnitude of 1.1 V.

The invention will now be described in greater detail with reference to the accompanying Figures, corresponding elements in the Figures being given the same reference numerals. Herein:

Figure 1 shows a prior art transmission amplifier which also functions as a line voltage stabiliser;

Figure 2 shows a current-voltage characteristic of the circuit as shown in Figure 1;

Figure 3 shows a modification of the transmission amplifier of Figure 1 which is thus, according to the invention, suitable for low line voltages;

Figure 4 shows a different modification of the transmission amplifier of Figure 1, more specifically suitable for integration;

Figure 5 shows a first embodiment of an other transmission amplifier suitable for low line voltages;

Figure 6 shows a second embodiment of this other transmission amplifier;

Figure 7 shows an embodiment of a comparator circuit for use in the transmission amplifiers of Figures 3 to 6;

Figure 8 shows a current-voltage characteristic measured with the aid of a circuit as shown in Figure 4.

The invention is applicable to both the transmission amplifier as disclosed in the said IEEE article and to the transmission amplifier as described in the European Patent Application,
publication number 0 154 366.

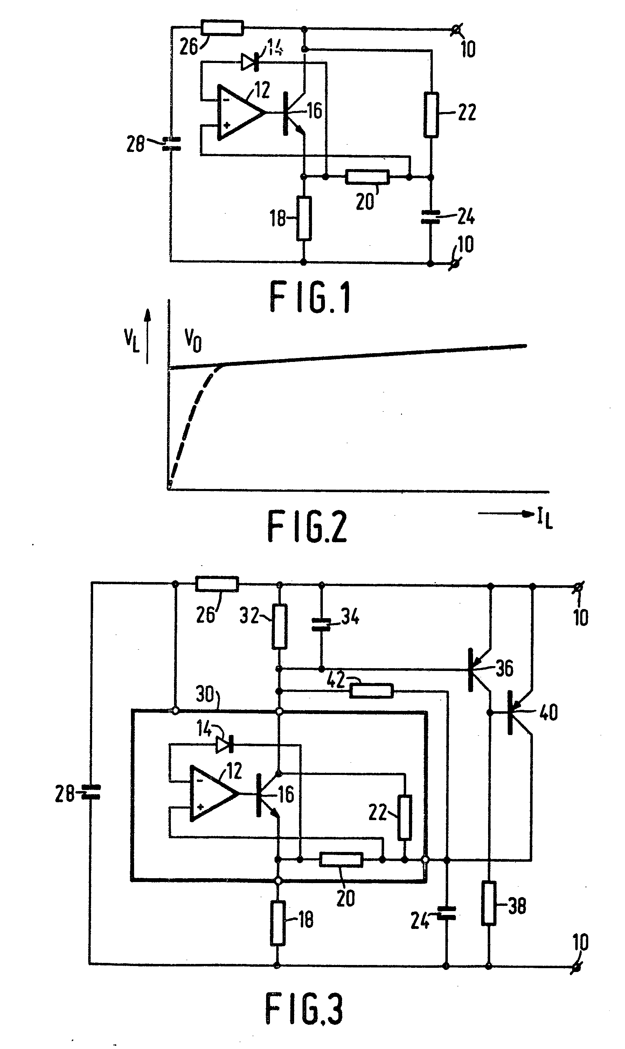

Figure 1 shows said last transmission amplifier, which is
also suitable for use as a line voltage stabiliser. This transmission
amplifier has a pair of connection terminals 10 for connection to the
subscriber's line via a conventional diode bridge, not shown, a
fed-back operational amplifier 12 functioning as an input stage of
the transmission amplifier and a diode 14, from which the reference
voltage for the line voltage stabilisation is derived. This diode
is set in the forward direction by a current source, not shown in
the Figures, causing the voltage across this diode to be equal to
the diode forward voltage $V_d$ of approximately 0.6 Volts.

The transmission amplifier further includes an output stage
formed by output transistor 16 with emitter resistor 18 of, for
example, $20\,\Omega$, a voltage divider constituted by the resistors 20
and 22, and a capacitor 24. The circuit as shown in Figure 1 also
includes a line terminating resistor 26 of, for example, $600\,\Omega$
arranged in series with a supply capacitor 28 of, for example, 100 uF.

As the fed-back operational amplifier controls its output
such that its two inputs have a substantially equal voltage, the
voltage across resistor 20 is equal to the diode forward voltage $V_d$.
The voltage across resistor 22 is then larger by a factor equal
to the resistance ratio. This last-mentioned voltage across resistor 22
functions as a reference voltage for the line voltage stabilisation.
Consequently, across the junction between the resistors 20 and 22
there is a voltage (compared with the voltage at the lower line
connection terminal which is chosen as the voltage reference) which
is equal to the difference between the line d.c. voltage and the
reference voltage; as a result thereof this differential voltage
is also present across the non-inverting input of the amplifier 12.

A voltage equal to the product of the direct current
through the output stage of the transmission amplifier and the
resistance value of resistor 18 is present across resistor 18.
Consequently a voltage equal to the sum of the voltage across
resistor 18 and the diode forward voltage $V_d$ is present at the
inverting input of amplifier 12. Thus, the voltage at this input
depends linearly on the line direct current.

By equating the voltages at the inverting and the non-inverting inputs of amplifier 12, a linear relationship between the direct current through the output stage of the transmission amplifier and the d.c. voltage thereacross is obtained. If no line direct current is required for, for example, feeding further electronic circuits, the the line direct current is equal to the direct current through the output stage of the transmission amplifier. The relationship between the line direct current and the line d.c. voltage is then illustrated by the straight line in Figure 2. In practical cases a portion of the line direct current is sometimes used for feeding other circuits; it then varies as illustrated by the broken line portion of the characteristic of Figure 2. It is assumed that the overall line direct current flows through the output stage. The line d.c. voltage is formed by a constant portion $V_o$ of, for example, 4 V on which a portion proportional to the line direct current is superposed.

If a telephone set having a characteristic as shown in Figure 2, is arranged in a long subscriber's line in parallel with a non-electronic telephone set, then the current through the output transistor 16 will decrease to zero. Consequently, the transmission amplifier cannot send a signal to the subscriber's line anymore so that this set becomes inoperative. This is caused by the comparatively low direct current resistance of, for example, 200 $\Omega$ of the non-electronic set. A long subscriber's line can only produce a limited line direct current, for example 15 mA. Then a voltage having a value of 3 V is produced across the 200 $\Omega$ -resistance set which is not enough for adequate operation of the electronic set, the more so when the voltage drop across a diode bridge, not shown, is taken into consideration. In the most advantageous case (when Schottky diodes are used) this voltage drop amounts to 0.8 V.

Figure 3 shows a circuit with which the last-mentioned problem can be solved in accordance with the invention. A number of the components already described with reference to Figure 1 can be integrated in an integrated circuit 30. The circuit further includes a current measuring resistor 32 of, for example, 120 Ohm, arranged in series with the collector of transistor 16. A capacitor 34 having a capacitance of, for example, 47 $\mu$F is arranged in parallel with resistor 32 for alternating current decoupling. A series arrangement of the main current path of a transistor 36 and a resistor 38 of, for example, 1 MΩ is provided between the line connection terminals 10; this resistor is incorporated in the collector lead of transistor 36. The base of this transistor is connected to that side of resistor 32 which is connected to the collector of transistor 16 and the emitter is connected to the other side of resistor 32. A transistor 40 has its emitter connected to the emitter of transistor 36, its base to the collector of transistor 36 and its collector to the junction of the resistors 20 and 22, a resistor 42 also being connected to this junction; the other side of this resistor is connected to the collector of transistor 16.

The circuit shown in Figure 3 operates as follows. As soon as the current through resistor 32 exceeds a predetermined value, for example 5 mA, transistor 36 becomes conductive, as a result of which the collector voltage and the emitter voltage of this transistor differ only to a very little extent. Transistor 40 is then non-conductive. If a larger current flows through the circuit via the subscriber's line, transistor 36 is driven to the saturated state and the greater part of the current flows to transistor 16 via the emitter-base path of transistor 36. If the current through resistor 32 becomes less than 5 mA, then transistor 36 changes to the non-conducting stage. The collector voltage of this transistor decreases, causing transistor 40 to become conductive. Current then flows to the junction of the resistors 20 and 22, as a result of which the voltage at this junction does not decrease further. This results in a decrease in the reference voltage for the line voltage stabilisation (i.e. the voltage across resistor 22). Because of the fact that the reference voltage is influenced thus, a voltage having the value of the diode forward voltage is preserved across resistor 20, causing amplifier 12 to stay within its control range and as a result of which transistor 16 can continue to conduct current.

A voltage of approximately 0.6 V is present across resistor 32, so that the voltage to be set by the line voltage stabilising circuit must be reduced by 0.6 V to ensure an unchanged voltage at the line connection terminals 10. This lower setting by the stabilising circuit is achieved by arranging a resistor 42 in parallel with resistor 22.

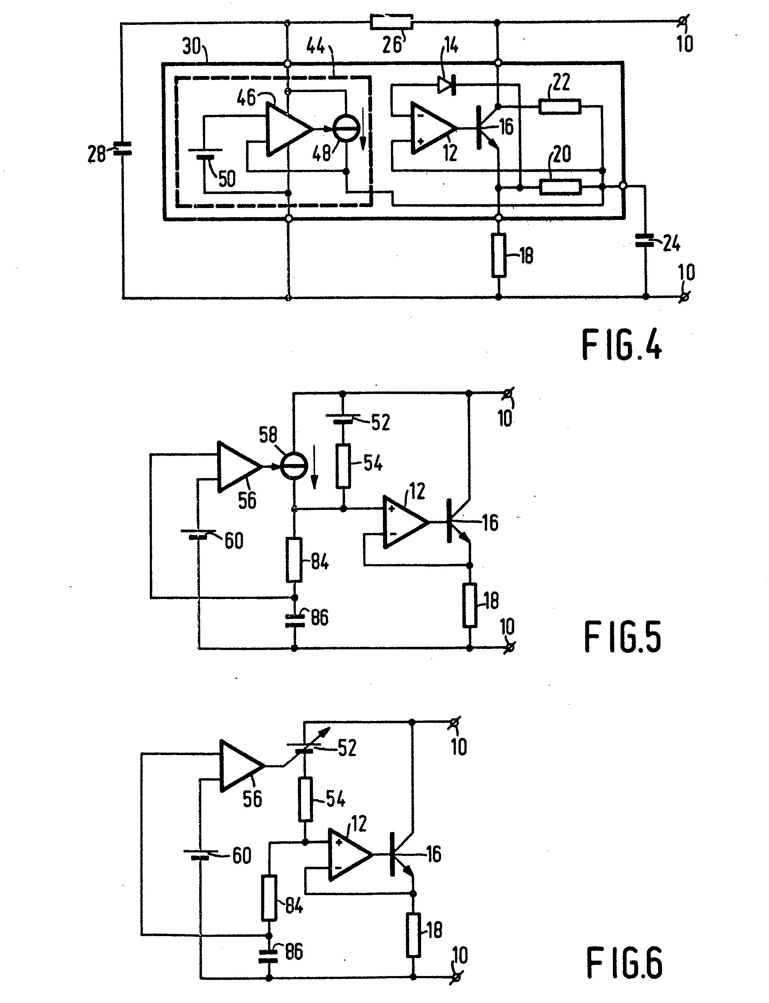

Figure 4 shows an embodiment of the invention which is particularly suitable for implementation in integrated circuit techniques. In addition to the components already described this circuit arrangement includes a circuit 44 for applying current to the junction of the resistors 20 and 22. This circuit 44 is formed by a comparator 46, a controllable current source 48 and a circuit 50 for producing a comparator reference voltage, shown symbolically as a voltage source.

Comparator 46 compares the comparator reference voltage with the voltage at the junction of the resistors 20 and 22. If this last-mentioned voltage decreases to below the comparator reference voltage, current source 48 is driven such that it starts applying current to this junction. This causes the reference voltage for the line voltage stabilisation to decrease, as a result of which transistor 16 continues to conduct current.

Also at low supply voltages (to the order of magnitude of 1.1 V) comparator 46 must continue operation to ensure the above-described control. An embodiment of such a comparator will be described in greater detail with reference to Figure 7.

Figure 5 shows a transmission amplifier, which also functions as a line voltage stabiliser, as disclosed in said IEEE-article, provided with additional components for use of the invention.

The circuit shown in Figure 5 is comprised of an operational amplifier 12 to whose output an output stage is connected, formed by transistor 16 and the associated emitter resistor 8. The inverting input of amplifier 12 is connected to the emitter of transistor 16, the non-inverting input is connected to one of the two line connection terminals 10 via a reference voltage source 52 and a resistor 54 arranged in series therewith. In addition, the non-inverting input is connected to the other line connection terminal via a series-arrangement of a resistor 84 and a capacitor 86. These resistor 84 and capacitor 86 are used for determining the a.c. output impedance of the transmission amplifier.

The reference voltage for the line voltage stabilisation is the voltage produced by voltage source 52, so that at the non-inverting input of amplifier 12 the difference between the line d.c. voltage and the reference voltage is applied. If the line d.c. voltage decreases to below the reference voltage, then amplifier 12 is driven to beyond its control range, so that transistor 16 does not conduct current anymore.

So as to ensure that the circuit shown in Figure 5 continues
operation even at a low line voltage, this circuit includes a
comparator 56, a comparator reference source 60 and a controllable
current source 58. If the difference between the line voltage and the
voltage source 52 decreases to below the voltage of reference source
60, then current source 58 is driven by comparator 56 so that current
is applied to that side of the resistor 54 connected to the non-
inverting input. Thus, the reference voltage produced by the series
arrangement of voltage source 52 and resistor 54 is reduced, so that
amplifier 12 stays within its control range.

Figure 6 shows a variation of the embodiment of the
invention shown in Figure 5. In Figure 6 the output of comparator 56
is directly connected to the reference voltage source 52. In a
manner known per se this voltage source is constituted by a voltage-
controllable voltage source. By reducing the voltage of this voltage
source 52 when the difference between the line d.c. voltage and the
voltage of source 52 decreases to below the comparator reference
voltage it is also accomplished that amplifier 12 stays within its
control range.

Figure 7 shows a circuit for applying current 44 for applying
current to the junction of the resistors 20 and 22 as described more
specifically with reference to Figure 4. This circuit is formed by
a comparator 46, a circuit 50 for producing a comparator reference
voltage, and a controllable current source 48.

Comparator 46 is comprised of current mirror 62, which is
formed by the transistor 64 and a diode 66, a differential stage
formed by two transistors 68 and 70 and a current source 72 included
in the common emitter lead. The collector of transistor 70 is
connected to the signal input of current mirror 62, the collector
of transistor 68 is connected to the signal output of this current
mirror. This signal output also constitutes the output of comparator 46.

A first input of comparator 46 is connected to comparator
reference voltage circuit 50. This circuit 50 is formed by a series
arrangement of, arranged one after the other, a current source 74,
two diodes 76 and 78 and a resistor 80. The reference voltage is
taken from the junction between current source 44 and diode 76.

A controllable current source 58 which in this embodiment
is constituted by a transistor, is connected to the output of comparator

46. The control input of this current source 48 is formed by the base of this transistor. The collector of this transistor, forming the output of current source 48, is connected to the other input of comparator 46. Because of this last-mentioned connecting mode comparator 46 and current source 48 form a feedback system. The output 82 thus formed is connected to said junction of resistors 20 and 22.

Figure 8 shows the relationship between the line direct current $I_L$ and the line d.c. voltage $V_L$. This characteristic is measured using the circuit of Figure 4. For voltages higher than 3.8 V this voltage is formed by a 3.6 V constant portion $V_o$, on which a portion proportional to the line current is superposed. For voltages less than 3.8 V it was found that the circuit still conducts current, so that the transmission amplifier is still capable of transmitting a signal through the subscriber's line.

CLAIMS

1.        A telephone set which is fed with line d.c. voltage via the subscriber's line, comprising a transmission amplifier which is in the form of a line voltage stabiliser including an input stage constituted by a fed-back operational amplifier, the transmission amplifier comprising a circuit for forming a reference voltage for line voltage stabilisation, means for forming the difference between the line d.c. voltage and the reference voltage, which difference voltage is applied to a first input of the operational amplifier, and means for producing an auxiliary voltage which linearly depends on the line direct current, the auxiliary voltage being applied to a second input of the operational amplifier, characterized in that the transmission amplifier includes means which reduce the reference voltage if the line d.c. voltage decreases to below a predetermined value.

2.        A telephone set as claimed in Claim 1, in which the circuit for producing the reference voltage includes a resistor one side of which is coupled to the first input of the operational amplifier, characterized in that the circuit for producing the reference voltage includes a controllable current source producing an output current which is substantially independent of the load and is connected to that side of the resistor coupled to the first input of the operational amplifier, and that the transmission amplifier includes a control circuit connected to the subscriber's line for controlling the current source in dependence on the line voltage or line current, respectively.

3.        A telephone set as claimed in Claim 2, characterized in that the control circuit includes a current measuring resistor which is incorporated in series with one of the subscriber's line conductors, a transistor whose emitter-base path is connected across the current measuring resistor and whose collector, which constitutes the output of the control circuit, is connected to the other conductor of the subscriber's line via a collector resistor.

4.        A telephone set as claimed in Claim 2, characterized in that the control circuit is in the form of a comparator circuit an input of which is connected to a circuit for producing a comparator reference voltage, and whose other input is connected to the second input of the operational amplifier.

5.      A telephone set as claimed in Claim 4, characterized in that the comparator circuit is constituted by a current mirror to the input and output of which the collector of a transistor is connected, these two transistors together forming a differential stage with a common emitter lead which includes a current source, the output of this comparator being constituted by the output of the current mirror.

FIG.1

FIG.2

FIG.3

0194723

1-III-PHN 11303

**FIG.4**

**FIG.5**

**FIG.6**

FIG.7

FIG.8

European Patent Office

**EUROPEAN SEARCH REPORT**

## DOCUMENTS CONSIDERED TO BE RELEVANT

| Category | Citation of document with indication where appropriate, of relevant passages | Relevant to claim | CLASSIFICATION OF THE APPLICATION (Int. Cl.4) |
|---|---|---|---|
| D,A | IEEE JOURNAL OF SOLID-STATE CIRCUITS, vol. SC-17, no. 6, December 1982, pages 1149-1157, IEEE, New York, US; P. CONSIGLIO et al.: "A programmable speech circuit suitable for telephone transducers" <br> * Page 1151, column 1, line 3 - page 1154, column 1, line 7; figures 5-10 * | 1-5 | H 04 M 1/60 |
| A | WO-A-7 900 295 (GENERAL ELECTRIC) <br> * Page 5, line 1 - page 16, line 34; figures * | 1-5 | |
| A | US-A-4 439 637 (TERRY) <br> * Column 2, line 11 - column 7, line 24; figures * | 1-5 | |
| A | US-A-4 233 474 (HISHINUMA) <br> * Column 2, line 49 - column 7, line 36; figures * | 1-5 | TECHNICAL FIELDS SEARCHED (Int. Cl.4) <br><br> H 04 M <br> H 03 F |

The present search report has been drawn up for all claims

| Place of search | Date of completion of the search | Examiner |
|---|---|---|
| THE HAGUE | 23-05-1986 | KEPPENS P.M.R. |

EPO Form 1503 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document